(19) Europäisches Patentamt
European Patent Office
Office européen des brevets

(11) **EP 2 299 767 B1**

(12) **EUROPEAN PATENT SPECIFICATION**

(45) Date of publication and mention
of the grant of the patent:
**13.11.2013 Bulletin 2013/46**

(51) Int Cl.:
***H04W 72/10*** *(2009.01)*

(21) Application number: **10177229.1**

(22) Date of filing: **16.09.2010**

(54) **Femtocell and resource allocation method thereof**

Femtozelle und Ressourcenzuweisungsverfahren dafür

Femtocellule et son procédé d'affectation de ressources

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.09.2009 US 243551 P**

(43) Date of publication of application:
**23.03.2011 Bulletin 2011/12**

(73) Proprietor: **Institute for Information Industry Taipei (TW)**

(72) Inventors:
• **Lin, Hsuan-Li**
**105, Taipei City (TW)**
• **Chou, Yu-Shen**
**108, Taipei City (TW)**
• **Huang, Ching-Yao**
**300, Hsinchu City (TW)**
• **Chiou, Sheng-Lun**
**510, Changhua County (TW)**

(74) Representative: **Michalski Hüttermann & Partner Patentanwälte**
**Speditionstraße 21**
**40221 Düsseldorf (DE)**

(56) References cited:
**US-A1- 2009 221 295**

• **VODAFONE ET AL: "LTE HeNB Interference studies: Hybrid cell deployment scenarios", 3GPP DRAFT; R4-092504_HYBRIDCELL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, CA; 20090703, 3 July 2009 (2009-07-03), XP050353724, [retrieved on 2009-07-03]**
• **YONG BAI ET AL: "Resource coordination and interference mitigation between macrocell and femtocell", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 1401-1405, XP031659647, ISBN: 978-1-4244-5122-7**
• **INSTITUTE FOR INFORMATION INDUSTRY (III) ET AL: "Resource priority region for hybrid access mode HeNB", 3GPP DRAFT; R4-094001_RESOURCE_PRIORITY_REGION_ FOR_HYB RID_ACCESS_HENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050393561, [retrieved on 2009-10-19]**

**Description**

**BACKGROUND OF THE INVENTION**

Field of the Invention

The present invention relates to a femtocell and a resource allocation method thereof; more particularly, the present invention relates to a femtocell and a resource allocation method thereof that can solve the problems of dead zones.

Descriptions of the Related Art

A femtocell is a cellular access point that can be deployed in a network system to extend coverage (especially indoor coverage) of a mobile operator and reduce the cost of deploying a macrocell. A femtocell is sometimes referred to as a home base station, a small cellular base station, or a Home (e)NodeB in the 3$^{rd}$ Generation Partnership Project (3GPP).

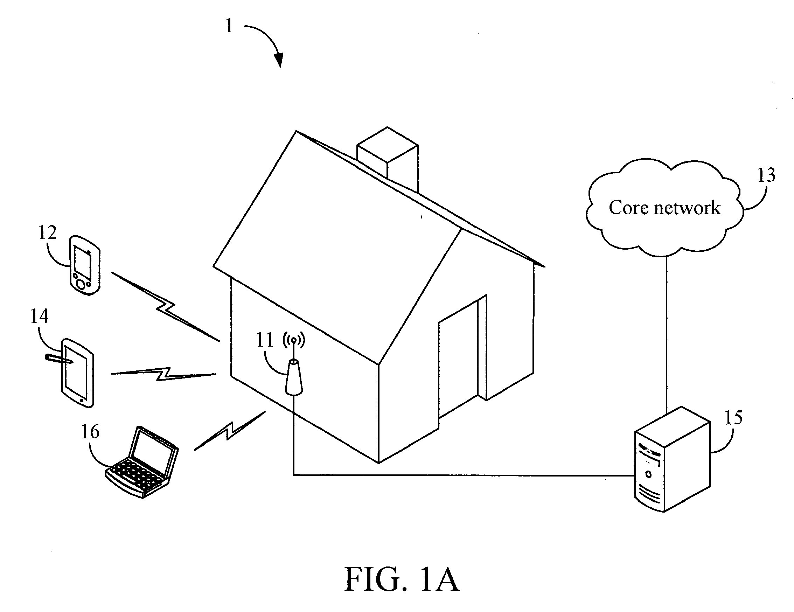

**FIG. 1A** depicts a conventional network system **1** that adopts a femtocell **11**. At the back end, the femtocell **11** is connected to the network (including a gateway **15** and a core  network **13**) of the mobile operator by an existing wired network technology (e.g., through a Digital Subscriber Line (DSL) modem or through a cable modem). At the front end, the femtocell uses a licensed wireless frequency band, so no change need to be made on user equipments **12, 14, 16** subscribing the network. The user equipments **12, 14, 16** use the best link quality with their neighboring femtocell, such as the femtocell **11**.

From the viewpoint of femtocells, there are two kinds of members (i.e. user equipments that subscribe the network): Closed Subscriber Group (CSG) member and non-CSG member. A CSG member is granted to access the femtocell, while a non-CSG member is treated as a foreigner and may not access the femtocell. Access modes provided by femtocells can be categorized into three types: closed access mode, open access mode, and hybrid access mode. A femtocell that is in a closed access mode means that only a CSG member can access the femtocell. A femtocell that is in an open access mode means that both a CSG member and a non-CSG member can access the femtocell, and they are treated equally. Finally, a femtocell that is in a hybrid access mode means that a CSG member has a higher priority than a non-CSG does.

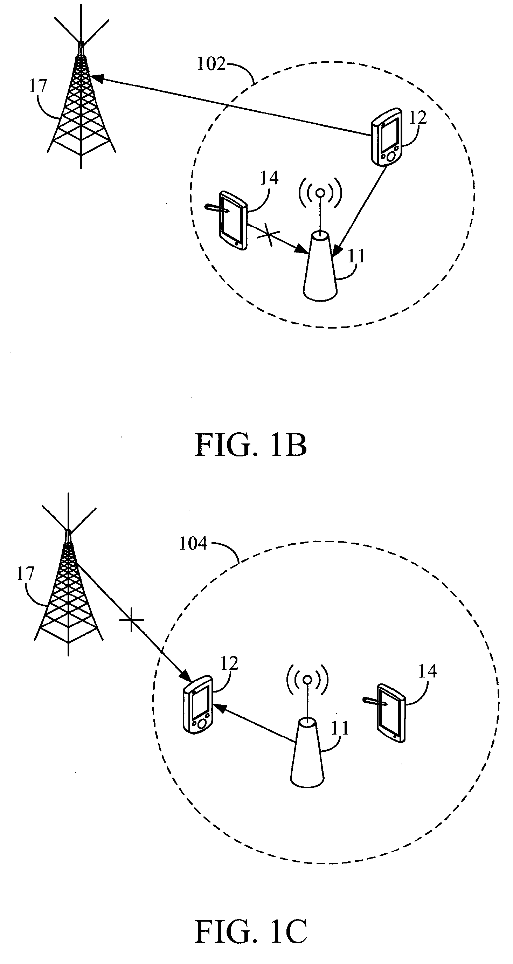

For a femtocell that is in a hybrid access mode, both uplink and downlink transmissions introduce dead zones. **FIG 1B** illustrates an uplink transmission scenario that causes a dead zone **102** to CSG members, such as the user equipment **14.** In **FIG 1B**, the femtocell **11** is in a hybrid access mode, the user equipment **14** is a CSG member, and the user equipment **12** is a non-CSG member. When the femtocell **11** runs out of service, it blocks the non-CSG members, such as the user equipment **12.** The user equipment **12** then establishes a link with  the macrocell **17. The** user equipment **12** has to boost its power to increase the probability of successful uplink transmission with the macrocell **17.** Nevertheless, the transmissions between the user equipment **14** and the femtocell **11** will be interfered by the user equipment **12** and have poor qualities. The area that is interfered by the user equipment **12** and has poor transmission quality is called a dead zone **102.**

**FIG. 1C** illustrates a downlink transmission scenario that causes a dead zone **104** to non-CSG members, such as the user equipment **12.** Likewise, the femtocell **11** is in a hybrid access mode, the user equipment **14** is a CSG member, and the user equipment **12** is a non-CSG member. The user equipment **12** is blocked by the femtocell **11** and then connected to the macrocell **17.** Since the user equipment **12** is closer to the femtocell **11** than to the macrocell **17,** the downlink transmissions between the user equipment **12** and the macrocell **17** are interfered by the femtocell **11** and have poor qualities. The area that is interfered by the femtocell **11** and has poor transmission quality is called a dead zone **104.**

The U.S. patent application publication No. 2009/0221295 A1 is one of the closest prior art in this field. According to the technique disclosed in this patent application, a femtocell increases efficiency and coverage of a macro-cellular network operating in a co-channel manner within the macrocell spectrum. Specifically, the femtocell selects subcarriers for its mobile station using both the subcarrier allocation map received from the macrocell and a spectrum sensing operation. Interference is avoided by selecting only subcarriers not allocated by the macrocell and subcarriers allocated to users not nearby to the femtocell. However, by using the technique disclosed in U.S. patent application publication No. 2009/0221295 A1, the aforementioned dead-zone problems of CSG members and non-CSG members still exist.

In the article "LTE HeNB Interference Studies: Hybrid Cell Deployment Scenarios," 3GPP DRAFT, R4-092504 July 3, 2009, several scenarios of deploying hybrid femtocells are discussed. Although interferences caused by hybrid femtocells are brought up, no solution is provided.

Yet the paper "Resource Coordination and Interference Mitigation between Macrocell and Femtocell" published on September 13, 2009 is another closest prior art in this field. In this paper, femtocells embedded in a macrocell are differentiated to inner and outer femtocells, which operate in partitioned spectrtun and shared spectrum, respectively. To mitigate the remaining interference from outer femtocell near-by modernized user equipments (MUE), an interference mitigation scheme is introduced such that macrocell is notified by near-by MUE and then performs scheduling to release spectrum for them. Although interferences between macrocell and femtocell are addressed, the dead-zone problems of CSG members and non-CSG members are not mentioned.

According to the above descriptions, there is an urgent need in solving the problems of dead zones of the current femtocells.

## SUMMARY OF THE INVENTION

An objective of the present invention is to provide a resource allocation method for use in a femtocell. The resource allocation method comprises the steps of: (a) enabling the femtocell to assign a first region of a frame as a Closed Subscriber Group (CSG) region according to a threshold, (b) enabling the femtocell to assign a second region of the frame as a non-CSG region according to the threshold, and (c) enabling the femtocell to acquire a user type of a user equipment. It is noted that the CSG region and the non-CSG region are exclusive. The resource allocation method further comprises the following steps when the user type is CSG: enabling the femtocell to allocate a first scheduling unit in the CSG region to the user equipments, enabling the femtocell to determine that a second scheduling unit is available in the non-CSG region, and enabling the femtocell to allocate the second scheduling unit to the user equipment. The resource allocation method further comprises the following steps when the user type is non-CSG: enabling the femtocell to allocate a third scheduling unit in the non-CSG region to the user equipment, enabling the femtocell to determine that a fourth scheduling unit is available in the CSG region, and enabling the femtocell to allocate the fourth scheduling unit to the user equipment.

Another objective of the present invention is to provide a femtocell. The femtocell comprises a storage unit and a processing unit. The storage unit is configured to store a threshold. The processing unit is configured to assign a first region of a frame as a CSG region according to the threshold and assign a second region of the frame as a non-CSG region according to the threshold. It is noted that the CSG region and the non-CSG region are exclusive. The processing unit is further configured to acquire a user type of a user equipment. When the user type is CSG, the processing unit is further configured to allocate a first scheduling unit in the CSG region to the user equipment, determine that a second scheduling unit is available in the non-CSG region, and allocate the second scheduling unit to the user equipment. When the user type is non-CSG, the processing unit is further configured to allocate a third scheduling unit in the non-CSG region to the user equipment, determine that a fourth scheduling unit is available in the CSG region and allocate the fourth scheduling unit to the user equipment.

The femtocell and the resource allocation method thereof of the present invention utilize a threshold to divide a frame into a CSG region and a non-CSG region. Regarding the non-CSG region, a user equipment that is a non-CSG member to the femtocell has a higher priority to use resources within the non-CSG region than a user equipment that is a CSG member does. If there is an available resource in the non-CSG region, a user equipment that is a CSG member is able to use it. Regarding the CSG region, a user equipment that is a CSG member to the femtocell has a higher priority to use resources within the CSG region than a user equipment that is a non-CSG member does. By doing so, the problems of dead zones can be eased.

The detailed technology and preferred embodiments implemented for the subject invention are described in the following paragraphs accompanying the appended drawings for people skilled in this field to well appreciate the features of the claimed invention.

## BRIEF DESCRIPTION OF THE DRAWINGS

FIG 1A illustrates a conventional network system that adopts a femtocell;
FIG. 1B illustrates an uplink transmission scenario that causes a dead zone to CSG members;
FIG 1C illustrates a downlink transmission scenario that causes a dead zone to non-CSG members;
FIGs. 2A, 2B, and 2C illustrate a first embodiment of the present invention;
FIGs. 2D, 2E, 2F, 2G, 2H, and 2I individually illustrate a frame being assigned a CSG-region and a non-CSG region;
FIG 2J illustrates a frame conforming to the Long Term Evolution (LTE) standard; and
FIG. 3 illustrates a flowchart of a second embodiment of the present invention.

## DESCRIPTION OF THE PREFERRED EMBODIMENT

In the following descriptions, the present invention will be explained with reference to various embodiments;

nevertheless, these embodiments are not intended to limit the present invention to any specific environment, application, or particular implementations described in these embodiments. Therefore, descriptions of these embodiments are only provided for purpose of illustration but not to limit the present invention. It should be appreciated that elements unrelated directly to the present invention are omitted from the embodiments and the attached drawings.

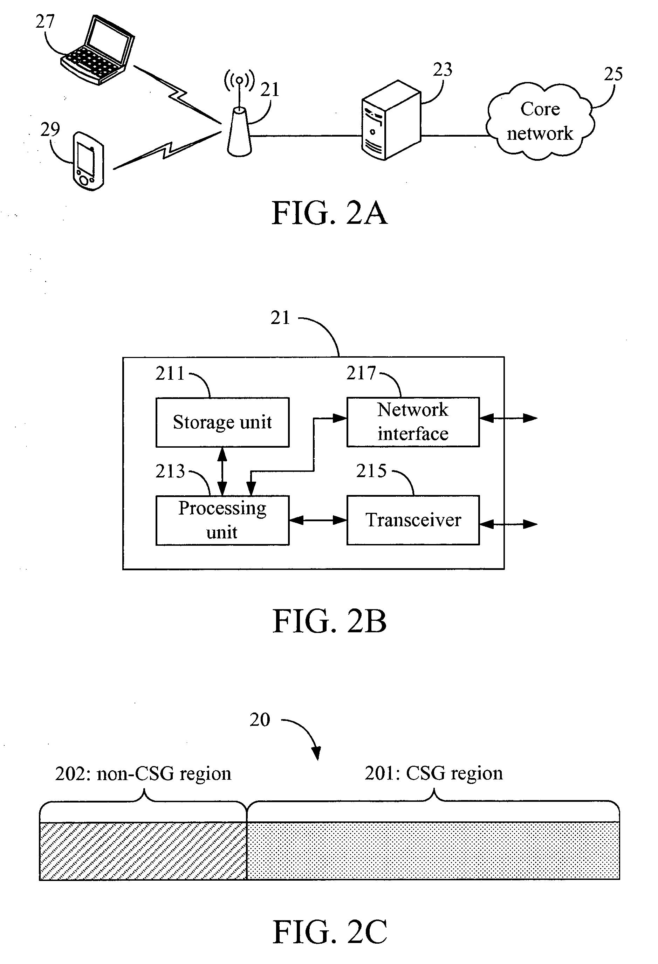

**FIGs. 2A** and **2B** illustrate a first embodiment of the present invention. A femtocell **21** is connected to a core network **25** through a gateway **23** using wired network technology. Two user equipments **27, 29** are wirelessly connected to the femtocell **21**. The user equipment **27** is a CSG member to the femtocell **21,** while the user equipment **29** is a non-CSG member to the femtocell **21**. The femtocell **21** comprises a storage unit **211,** a processing unit **213,** a transceiver **215,** and a network interface **217**. The femtocell **21** is connected to the gateway **23** via its network interface **217**. The user equipments **27, 29** are individually connected to the transceiver **215** of the femtocell **21.**

The storage unit **211** is configured to store a threshold. When the processing unit **213** has to process a frame **20,** the processing unit **211** assigns a first region of a frame as a CSG region **201** according to the threshold and assigns a second region of the frame as a non-CSG region **202** according to the threshold. It is noted that the CSG region **201** and the non-CSG region **202** are exclusive. Regarding the CSG region **201,** CSG members have higher priority to use resources in this region than non-CSG members do. When there are an available resource in the CSG region **201,** non-CSG members can use them. Regarding the non-CSG region **202,** non-CSG members have higher priority to use resources in this region than the CSG members do. When there is an available resource in the non-CSG region **202,** CSG members could use them.

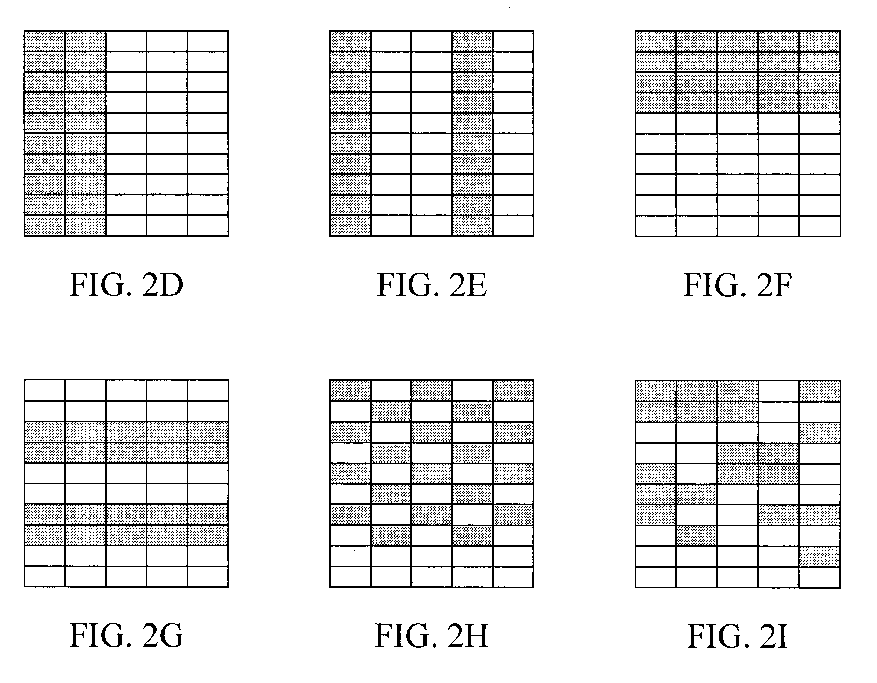

The processing unit **213** may assign the CSG-region and the non-CSG region of a frame according to the threshold through various ways as shown in **FIGs. 2D, 2E, 2F, 2G, 2H,** and **2I**. **FIGs. 2D, 2E, 2F, 2G, 2H,** and **2I** individually illustrate a frame, wherein the horizontal axes represent frequency, the vertical axes represent time, and each small rectangle represents a scheduling unit. Specifically, each of the scheduling units represents a smallest unit of the resources that can be assigned to a user equipment. In **FIGs. 2D, 2E, 2F, 2G, 2H,** and **2I,** scheduling units in grey color belong to non-CSG region, scheduling units in white color belong to CSG region, and the threshold is set in a way that 40% of the scheduling units of a frame belong to the non-CSG region and 60% of the scheduling units of a frame belong to the CSG region. In **FIGs. 2D** and **2E,** the CSG-region and the non-CSG region are assigned on a frequency division basis. In **FIGs. 2F** and **2G,** the CSG-region and the non-CSG region are assigned on a time division basis. In **FIG. 2H,** the CSG-region and the non-CSG region are assigned according to a pattern. In **FIG 2I,** the CSG-region and the non-CSG region are assigned randomly.

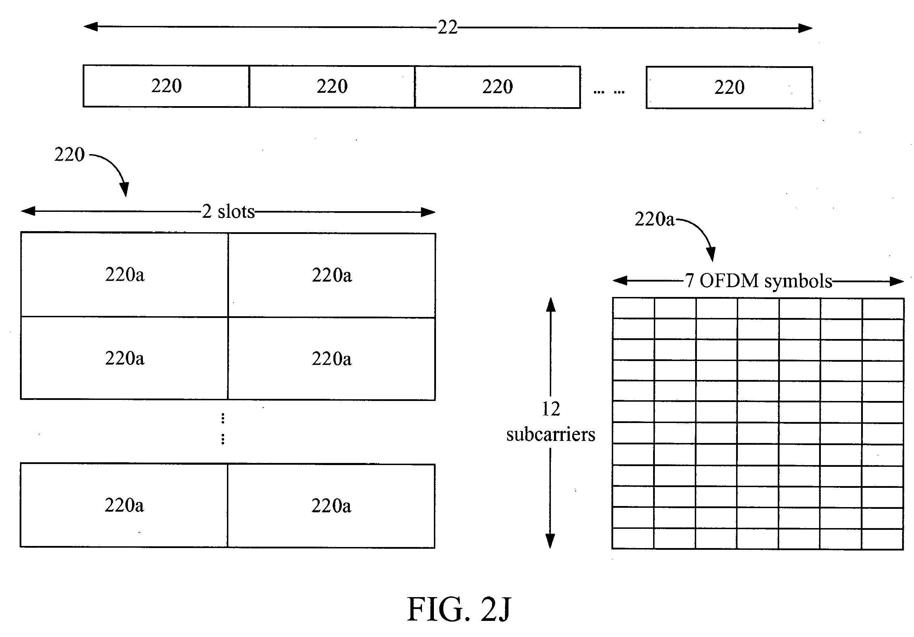

To elaborate the idea of a scheduling unit, an example of a frame **22** conforming to the Long Term Evolution (LTE) standard is given in **FIG. 2J**. The frame **22** comprises ten subframes **220**. Each of the subframes **220** is divided into two slots in the horizontal axis and is divided into a plurality of resource blocks in the vertical axis. A duration of a slot is 0.5 ms. After the division, each of the subframes **220** comprises a plurality of physical resource blocks **220a**. In the LTE standard, a physical resource block **220a** comprises six or seven Orthogonal Frequency-Division Multiplexing (OFDM) symbols in the horizontal axis and twelve subcarriers in the vertical axis. Given the above LTE frame **22**, a scheduling unit may comprise only one single physical resource block, two consecutive physical resource blocks in the horizontal direction, etc. It is noted that the present invention does not limit the number of physical resource blocks comprised in a scheduling unit. In addition, the present invention does not limit to the LTE standard.

To achieve better performance, the threshold may be decided according to the location of the femtocell **21** and/or the density of user equipments in the coverage of the femtocell **21**. For example, two parameters may be used to evaluate the goodness of the threshold: the effective data rate when using only one or more macrocells (denoted as $Eff\_data\_rate_{macro\_only}$) and the effective data rate when adopting the femtocell **21** (denoted as $Eff\_data\_rate_{with\_femtocell}$). If the threshold can make $Eff\_data\_rate_{with\_femtocell}$ being greater than $Eff\_data\_rate_{macro\_only}$, the threshold is a good one. Therefore, one may use the following equation to derive the threshold:

$$Eff\_data\_rate_{macro\_only} < Eff\_data\_rate_{with\_femtocell} \qquad (1)$$

The equation (1) is equivalent to the following equation:

$$\frac{r_{M_0,x}\left(\gamma_{M_0,x}\right)}{\left|\mu_{M_0}\right|} < \frac{\alpha_{k,x} \cdot r_{k,x}\left(\gamma_{k,x}\right)}{\left|\mu_k\right|} \qquad (2)$$

wherein the parameter $M_0$ represents the macrocell, the parameter x represents the user equipment (e.g. the user equipments **27, 29**), and the parameter k denotes the femtocell (e.g. the femtocell **21**). The parameter r represents the system capacity. The parameter $\gamma$ is calculated by the reference signal received power (RSRP) function, which is familiar to people skilled in the art. In addition, the parameter $\mu$ represents the average number of the user equipments, the parameter $\alpha_{k,x}$ represents the resource amount that the user equipment required from the femtocell, and the parameter $\alpha_k$ represents the threshold. For better performance,

The following descriptions will focus on the usages of the CSG region **201** and the non-CSG region **202**. It is assumed that the user equipment **27** just handovers to the femtocell **21**. The processing unit **213** acquires a user type of the user equipment **27**. The processing unit **213** determines that the user type of the user equipment **27** is CSG. Afterwards, the processing unit **213** allocates at least one scheduling unit in the CSG region **201** of the frame **20** to the user equipment **27**. It is noted that the number of scheduling units in the CSG region **201** assigned to the user equipment **27** is adjustable and is not used to limit the scope of the present invention. In this embodiment, the processing unit **213** may further determine if at least one scheduling unit is available in the non-CSG region **202**. If there is at least one available scheduling unit in the non-CSG region 202, the processing unit **213** will allocate at least one available scheduling unit in the non-CSG region **202** to the user equipment **27**. Similarly, the number of scheduling units in the non-CSG region **202** assigned to the user equipment **27** is adjustable and is not used to limit the scope of the present invention.

It is assumed that the user equipment **29** just handovers to the femtocell **21**. The processing unit **213** acquires a user type of the user equipment **29**. The processing unit **213** determines that the user type of the user equipment **29** is non-CSG. Afterwards, the processing unit **213** allocates at least one scheduling unit in the non-CSG region **202** of the frame **20** to the user equipment **29**. It is noted that the number of scheduling units in the non-CSG region **202** assigned to the user equipment **29** is adjustable and is not used to limit the scope of the present invention. In this embodiment, the processing unit **213** may further determine if at least one scheduling unit is available in the CSG region **201**. If there is at least one available scheduling unit in the CSG region **201**, the processing unit **213** will allocate at least one available scheduling unit in the CSG region **201** to the user equipment **29**. Similarly, the number of scheduling units in the CSG region **201** assigned to the user equipment **29** is adjustable and is not used to limit the scope of the present invention.

According to the above descriptions, it is learned that the femtocell **21** assigns a CSG region and a non-CSG region in a frame according to a threshold. Thereafter, CSG members (e.g. the user equipment **27**) have higher priorities to use the CSG region **201** and non-CSG members (e.g. the user equipment **29**) have higher priorities to use the non-CSG region **202**. It is noted that when frames are classified into uplink frames and downlink frames, two thresholds can be used, wherein one threshold is for uplink frames and the other threshold is for downlink frames.

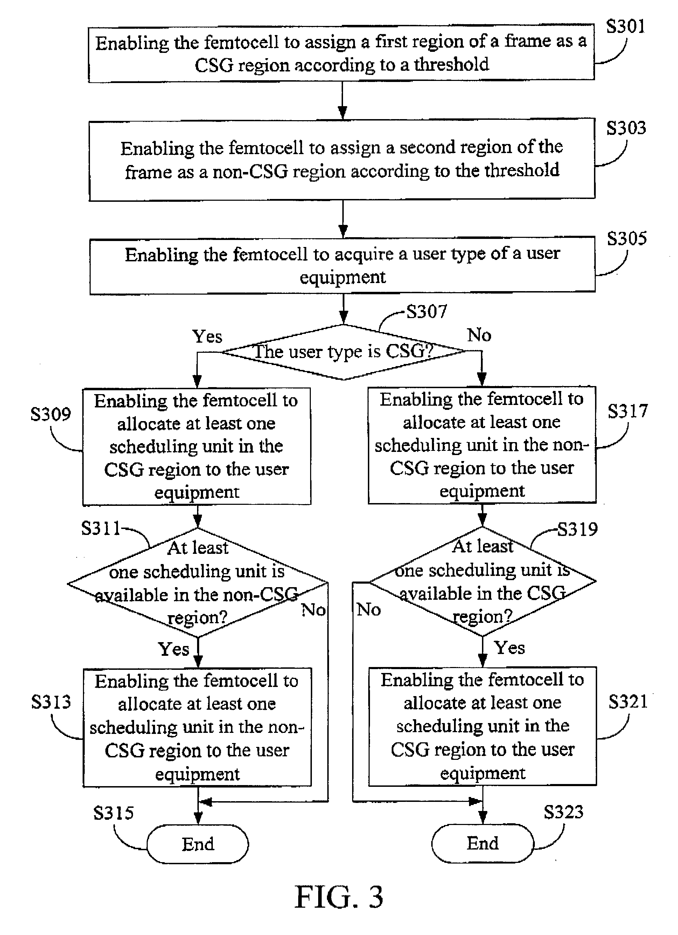

A second embodiment of the present invention is a resource allocation method, whose flowchart is drawn in **FIG. 3**. The resource allocation method can be used in a femtocell, such as the femtocell **21** in the first embodiment.

First, the resource allocation method executes step **S301** to enable the femtocell to assign a first region of a frame as a CSG region according to a threshold. Then, step **S303** is executed to enable the femtocell to assign a second region of the frame as a non-CSG region according to the threshold. It is noted that the step **S303** may be executed before the step **S301**. The resource allocation method then executes step **S305** to enable the femtocell to acquire a user type of a user equipment. In step **S307**, the resource allocation method enables the femtocell to determine whether the user type is CSG If the user type is CSG, then steps **S309** to **S315** are executed. If the user type is not CSG, it means that the user type is non-CSG and then steps **317** to **323** are executed.

When the user type is CSG, step **S309** is executed to enable the femtocell to allocate at least one scheduling unit in the CSG region to the user equipment. Afterwards, step **311** is executed to enable the femtocell to determine whether at least one scheduling unit is available in the non-CSG region. If it is yes in step **S311**, then the step **S313** is executed to enable the femtocell to allocate at least one scheduling unit of the non-CSG region to the user equipment. Next, step **S315** is executed to finish the resource allocation method. If it is no in step **S311**, the resource allocation method proceeds to the step **S315** directly.

When the user type is non-CSG, step **S317** is executed to enable the femtocell to allocate at least one scheduling unit in the non-CSG region to the user equipment. Afterwards, step **319** is executed to enable the femtocell to determine whether at least one scheduling unit is available in the CSG region. If it is yes in step **S319**, then the step **S321** is executed to enable the femtocell to allocate the scheduling unit of the CSG region to the user equipment. Next, step **S323** is executed to finish the resource allocation method. If it is no in step **S319**, the resource allocation method proceeds to the step **S323** directly.

In addition to the aforesaid steps, the second embodiment can also execute all the operations set forth in the first embodiment. How the second embodiment executes these operations will be readily appreciated by those of ordinary skill in the art based on the explanation of the first embodiment, and thus will not be further described herein.

The femtocell and the resource allocation method thereof of the present invention utilize a threshold to divide a frame into a CSG region and a non-CSG region. Regarding the non-CSG region, a user equipment that is a non-CSG member to the femtocell has a higher priority to use the resource within the non-CSG region than a user equipment that is a CSG member does. If there is available resource in the non-CSG region, a user equipment that is a CSG member is able to use it. Regarding the CSG region, a user equipment that is a CSG member to the femtocell has a higher priority to use the resource within the CSG region than a user equipment that is a non-CSG member does. By doing so, the problems of dead zones can be eased.

Since a frame comprises both a CSG region and a non-CSG region, both CSG members and non-CSG members can be served by the femtocell. The problems of dead zones caused by macrocells can be avoided. In addition, in the condition that all the CSG members have been served and the CSG region still has available scheduling units (i.e. resources), non-CSG member can use them. Likewise, in the condition that all the non-CSG members have been served and the non-CSG region still has available scheduling units (i.e. resources), CSG member can use them. Therefore, the data rate of the user equipments served by the femtocell can be increased as well.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

**Claims**

1. A resource allocation method for use in a femtocell (21), the resource allocation method being **characterized by** comprising the steps of:

   enabling the femtocell (21) to assign a first region of a frame (20, 22) as a CSG region (201) according to a threshold;
   enabling the femtocell (21) to assign a second region of the frame (20, 22) as a non-CSO region (202) according to the threshold, the CSG region (201) and the non-CSG region (202) being exclusive;
   enabling the femtocell (21) to acquire a user type of a user equipment;
   enabling the femtocell (21) to perform the following steps when the user type is CSG:

      enabling the femtocell (21) to allocate a first scheduling unit in the CSG region (201) to the user equipment;
      enabling the femtocell (21) to determine that a second scheduling unit is available in the non-CSG region (202); and
      enabling the femtocell (21) to allocate the second scheduling unit to the user equipment; and

   enabling the femtocell (21) to perform the following steps when the user type is non-CSG:

      enabling the femtocell (21) to allocate a third scheduling unit in the non-CSG region (202) to the user equipment;
      enabling the femtocell (21) to determine that a fourth scheduling unit is available in the CSG region (201); and
      enabling the femtocell (21) to allocate the fourth scheduling unit to the user equipment,

   wherein each of the first scheduling unit, second scheduling unit, third scheduling unit, and fourth scheduling unit is a smallest unit of the resources that can be allocated.

2. The resource allocation method of Claim 1, wherein the resource allocation method is **characterized by** that the step of assigning the first region assigns the CSG region (201) of the frame (20, 22) on a frequency division basis and the step of assigning the second region assigns the non-CSG region (202) of the frame (20, 22) on the frequency division basis.

3. The resource allocation method of Claim 1, wherein the resource allocation method is **characterized by** that the step of assigning the first region assigns the CSG region (201) of the frame (20, 22) on a time division basis and the step of assigning the second region assigns the non-CSG region (202) of the frame (20, 22) on the time division basis.

4. The resource allocation method of Claim 1, wherein the resource allocation method is **characterized by** that each of the first scheduling unit and the fourth scheduling unit comprises a physical resource block (220a) of the CSG region (201) and each of the second scheduling unit and the third scheduling unit comprises a physical resource block (220a) of the non-CSG region (202).

5. A femtocell (21), being **characterized by** comprising:

a storage unit, being configured to store a threshold; and

a processing unit being configured to assign a first region of a frame (20, 22) as a CSG region (201) according to the threshold, assign a second region of the frame (20, 22) as a non-CSG region (202) according to the threshold, and acquire a user type of a user equipment, wherein the CSG region (201) and the non-CSG region (202) are exclusive;

wherein when the user type is CSG, the processing unit is further configured to allocate a first scheduling unit in the CSG region (201) to the user equipment, determine that a second scheduling unit is available in the non-CSG region (202), and allocate the second scheduling unit to the user equipment; and

wherein when the user type is non-CSG, the processing unit is further configured to allocate a third scheduling unit in the non-CSG region (202) to the user equipment, determine that a fourth scheduling unit is available in the CSG region (201) and allocate the fourth scheduling unit to the user equipment,

wherein each of the first scheduling unit, second scheduling unit, third scheduling unit, and fourth scheduling unit is a smallest unit of the resources that can be allocated.

6. The femtocell (21) of Claim 5, wherein the femtocell (21) is further **characterized by** that the processing unit assigns the CSG region (201) and the non-CSG region (202) of the frame (20, 22) on a frequency division basis.

7. The femtocell (21) of Claim 5, wherein the femtocell (21) is further **characterized by** that the processing unit assigns the CSG region (201) and the non-CSG region (202) of the frame (20, 22) on a time division basis.

8. The femtocell (21) of Claim 5, wherein the femtocell (21) is further **characterized by** that each of the first scheduling unit and the fourth scheduling unit comprises a physical resource block (220a) of the CSG region (201) and each of the second scheduling unit and the third scheduling unit comprises a physical resource block (220a) of the non-CSG region (202).


**Patentansprüche**

1. Ressourcenzuweisungsverfahren zur Verwendung in einer Femtozelle (21), wobei das Ressourcenzuweisungsverfahren **gekennzeichnet ist durch** die Schritte:

Veranlassen, dass die Femtozelle (21) einen ersten Bereich eines Rahmens (20, 22) gemäß einem Schwellenwert als einen CSG- (Closed Subscriber Group) Bereich (201) zuweist;

Veranlassen, dass die Femtozelle (21) einen zweiten Bereich des Rahmens (20, 22) gemäß dem Schwellenwert als einen Nicht-CSG-Bereich (202) zuweist, wobei der CSG-Bereich (201) und der Nicht-CSG-Bereich (202) sich wechselseitig ausschließen;

Veranlassen, dass die Femtozelle (21) einen Benutzertyp eines Benutzerendgeräts erfasst;

Veranlassen, dass die Femtozelle (21) die folgenden Schritte ausführt, wenn der Benutzertyp "CSG" ist:

Veranlassen, dass die Femtozelle (21) dem Benutzerendgerät eine erste Scheduling-Einheit im CSG-Bereich (201) zuweist;

Veranlassen, dass die Femtozelle (21) bestimmt, dass eine zweite Scheduling-Einheit innerhalb des Nicht-CSG-Bereichs (202) verfügbar ist; und

Veranlassen, dass die Femtozelle (21) dem Benutzerendgerät die zweite Scheduling-Einheit zuweist; und

Veranlassen, dass die Femtozelle (21) die folgenden Schritte ausführt, wenn der Benutzertyp "Nicht-CSG" ist:

Veranlassen, dass die Femtozelle (21) dem Benutzerendgerät eine dritte Scheduling-Einheit im Nicht-CSG-Bereich (202) zuweist;

Veranlassen, dass die Femtozelle (21) bestimmt, dass eine vierte Scheduling-Einheit im CSG-Bereich (201) verfügbar ist; und

Veranlassen, dass die Femtozelle (21) dem Benutzerendgerät die vierte Scheduling-Einheit zuweist,

wobei die erste Scheduling-Einheit, die zweite Scheduling-Einheit, die dritte Scheduling-Einheit und die vierte Scheduling-Einheit jeweils die kleinste Einheit der zuweisbaren Ressourcen sind.

**2.** Ressourcenzuweisungsverfahren nach Anspruch 1, wobei das Ressourcenzuweisungsverfahren **dadurch gekennzeichnet ist, dass** im Schritt zum Zuweisen des ersten Bereichs der CSG-Bereich (201) des Rahmens (20, 22) auf einer Frequenzmultiplexbasis zugewiesen wird und im Schritt zum Zuweisen des zweiten Bereichs der Nicht-CSG-Bereich (202) des Rahmens (20, 22) auf einer Frequenzmultiplexbasis zugewiesen wird.

**3.** Ressourcenzuweisungsverfahren nach Anspruch 1, wobei das Ressourcenzuweisungsverfahren **dadurch gekennzeichnet ist, dass** im Schritt zum Zuweisen des ersten Bereichs der CSG-Bereich (201) des Rahmens (20, 22) auf einer Zeitmultiplexbasis zugewiesen wird und im Schritt zum Zuweisen des zweiten Bereichs der Nicht-CSG-Bereich (202) des Rahmens (20, 22) auf einer Zeitmultiplexbasis zugewiesen wird.

**4.** Ressourcenzuweisungsverfahren nach Anspruch 1, wobei das Ressourcenzuweisungsverfahren **dadurch gekennzeichnet ist, dass** die erste Scheduling-Einheit und die vierte Scheduling-Einheit jeweils einen physikalischen Ressourcenblock (220a) des CSG-Bereichs (201) und die zweite Scheduling-Einheit und die dritte Scheduling-Einheit jeweils einen physikalischen Ressourcenblock (220a) des Nicht-CSG-Bereichs (202) aufweisen.

**5.** Femtozelle (21), **gekennzeichnet durch**:

eine Speichereinheit, die dafür konfiguriert ist, einen Schwellenwert zu speichern; und
eine Verarbeitungseinheit, die dafür konfiguriert ist, einen ersten Bereich eines Rahmens (20, 22) gemäß dem Schwellenwert als einen CSG-Bereich (201) zuzuweisen, einen zweiten Bereich des Rahmens (20, 22) gemäß dem Schwellenwert als einen Nicht-CSG-Bereich zuzuweisen und einen Benutzertyp eines Benutzerendgeräts zu erfassen, wobei der CSG-Bereich (201) und der Nicht-CSG-Bereich (202) sich wechselseitig ausschließen, wobei, wenn der Benutzertyp "CSG" ist, die Verarbeitungseinheit ferner dafür konfiguriert ist, dem Benutzerendgerät eine erste Scheduling-Einheit im CSG-Bereich (201) zuzuweisen, zu bestimmen, dass eine zweite Scheduling-Einheit im Nicht-CSG-Bereich (202) verfügbar ist, und dem Benutzerendgerät die zweite Scheduling-Einheit zuzuweisen, und
wobei, wenn der Benutzertyp "Nicht-CSG" ist, die Verarbeitungseinheit ferner dafür konfiguriert ist, dem Benutzerendgerät eine dritte Scheduling-Einheit im Nicht-CSG-Bereich (202) zuzuweisen, zu bestimmen, dass eine vierte Scheduling-Einheit im CSG-Bereich (201) verfügbar ist, und dem Benutzerendgerät die vierte Scheduling-Einheit zuzuweisen,
wobei die erste Scheduling-Einheit, die zweite Scheduling-Einheit, die dritte Scheduling-Einheit und die vierte Scheduling-Einheit jeweils eine kleinste Einheit der zuweisbaren Ressourcen sind.

**6.** Femtozelle (21) nach Anspruch 5, wobei die Femtozelle (21) ferner **dadurch gekennzeichnet ist, dass** die Verarbeitungseinheit den CSG-Bereich (201) und den Nicht-CSG-Bereich (202) des Rahmens (20, 22) auf einer Frequenzmultiplexbasis zuweist.

**7.** Femtozelle (21) nach Anspruch 5, wobei die Femtozelle (21) ferner **dadurch gekennzeichnet ist, dass** die Verarbeitungseinheit den CSG-Bereich (201) und den Nicht-CSG-Bereich (202) des Rahmens (20, 22) auf einer Zeitmultiplexbasis zuweist.

**8.** Femtozelle (21) nach Anspruch 5, wobei die Femtozelle (21) **dadurch gekennzeichnet ist, dass** die erste Scheduling-Einheit und die vierte Scheduling-Einheit jeweils einen physikalischen Ressourcenblock (220a) des CSG-Bereichs (201) und die zweite Scheduling-Einheit und die dritte Scheduling-Einheit jeweils einen physikalischen Ressourcenblock (220a) des Nicht-CSG-Bereichs (202) aufweisen.

**Revendications**

**1.** Procédé pour l'allocation des ressources, destiné à être utilisé dans une femtocell (21), le procédé pour l'allocation des ressources étant **caractérisé en ce qu'**il comprend les étapes suivantes :

permettre à la femtocell (21) d'assigner une première région d'un cadre (20, 22) en tant que région CSG (201) en fonction d'un seuil ;
permettre à la femtocell (21) d'assigner une deuxième région du cadre (20, 22) en tant que région non-CSG (202) en fonction du seuil, la région CSG (201) et la région non-CSG (202) étant exclusives ;
permettre à la femtocell (21) d'acquérir un type d'utilisateur pour un équipement d'utilisateur ;
permettre à la femtocell (21) d'exécuter les étapes suivantes lorsque le type d'utilisateur est CSG :

permettre à la femtocell (21) d'allouer une première unité d'ordonnancement à l'équipement d'utilisateur dans la région CSG (201) ;
permettre à la femtocell (21) de déterminer la qu'une deuxième unité d'ordonnancement est disponible dans la région non-CSG (202) ; et
permettre à la femtocell (21) d'allouer la deuxième unité d'ordonnancement à l'équipement d'utilisateur ; et

permettre à la femtocell (21) d'exécuter les étapes suivantes lorsque le type d'utilisateur est non-CSG :

permettre à la femtocell (21) d'allouer une troisième unité d'ordonnancement à l'équipement d'utilisateur dans la région non-CSG (202) ;
permettre à la femtocell (21) de déterminer qu'une quatrième unité d'ordonnancement est disponible dans la région CSG (201) ; et
permettre à la femtocell (21) d'allouer la quatrième unité d'ordonnancement à l'équipement d'utilisateur,

dans lequel chacune parmi la première unité d'ordonnancement, la deuxième unité d'ordonnancement, la troisième unité d'ordonnancement et la quatrième unité d'ordonnancement est la plus petite des unités parmi les ressources pouvant être allouées.

2. Procédé pour l'allocation des ressources selon la revendication 1, dans lequel le procédé pour l'allocation des ressources est **caractérisé en ce que** l'étape d'assignation de la première région assigne la région CSG (201) du cadre (20, 22) sur la base d'une répartition en fréquence, et l'étape d'assignation de la deuxième région assigne la région non-CSG (202) du cadre (20, 22) sur la base d'une répartition en fréquence.

3. Procédé pour l'allocation des ressources selon la revendication 1, dans lequel le procédé pour l'allocation des ressources est **caractérisé en ce que** l'étape d'assignation de la première région assigne la région CSG (201) du cadre (20, 22) sur la base d'une répartition dans le temps, et l'étape d'assignation de la deuxième région assigne la région non-CSG (202) du cadre (20, 22) sur la base d'une répartition dans le temps.

4. Procédé pour l'allocation des ressources selon la revendication 1, dans lequel le procédé pour l'allocation des ressources est **caractérisé en ce que** chacune parmi la première unité d'ordonnancement et la quatrième unité d'ordonnancement comprend un bloc de ressources physique (220a) de la région CSG (201), et chacune parmi la deuxième unité d'ordonnancement et la troisième unité d'ordonnancement comprend un bloc de ressources physique (220a) de la région non-CSG (202).

5. Femtocell (21) **caractérisée en ce qu'**elle comprend :

une unité de stockage configurée pour stocker un seuil ;
une unité de traitement configurée pour assigner une première région d'un cadre (20, 22) en tant que région CSG (201) en fonction d'un seuil, assigner une deuxième région du cadre (20, 22) en tant que région non-CSG (202) en fonction du seuil, et acquérir un type d'utilisateur d'un équipement d'utilisateur, dans laquelle la région CSG (201) et la région non-CSG (202) sont exclusives ;
dans laquelle, lorsque le type d'utilisateur est CSG, l'unité de traitement est en outre configurée pour allouer une première unité d'ordonnancement à l'équipement d'utilisateur dans la région CSG (201), déterminer qu'une deuxième unité d'ordonnancement est disponible dans la région non-CSG (202), et allouer la deuxième unité d'ordonnancement à l'équipement d'utilisateur ; et
dans laquelle, lorsque le type d'utilisateur est non-CSG, l'unité de traitement est en outre configurée pour allouer une troisième unité d'ordonnancement à l'équipement d'utilisateur dans la région non-CSG (202), déterminer qu'une quatrième unité d'ordonnancement est disponible dans la région CSG (201), et allouer la quatrième unité d'ordonnancement à l'équipement d'utilisateur,
dans laquelle chacune parmi la première unité d'ordonnancement, la deuxième unité d'ordonnancement, la troisième unité d'ordonnancement et la quatrième unité d'ordonnancement est la plus petite des unités parmi les ressources pouvant être allouées.

6. Femtocell (21) selon la revendication 5, dans laquelle la femtocell (21) est en outre **caractérisée en ce que** l'unité de traitement assigne la région CSG (201) et la région non-CSG (202) du cadre (20, 22) sur la base d'une répartition en fréquence.

7. Femtocell (21) selon la revendication 5, dans laquelle la femtocell (21) est en outre **caractérisée en ce que** l'unité de traitement assigne la région CSG (201) et la région non-CSG (202) du cadre (20, 22) sur la base d'une répartition dans le temps.

8. Femtocell (21) selon la revendication 5, dans laquelle la femtocell (21) est en outre **caractérisée en ce que** chacune parmi la première unité d'ordonnancement et la quatrième unité d'ordonnancement comprend un bloc de ressources physique (220a) de la région CSG (201), et chacune parmi la deuxième unité d'ordonnancement et la troisième unité d'ordonnancement comprend un bloc de ressources physique (220a) de la région non-CSG (202).

FIG. 1A

FIG. 1B

FIG. 1C

FIG. 2A

FIG. 2B

FIG. 2C

FIG. 2F

FIG. 2I

FIG. 2E

FIG. 2H

FIG. 2D

FIG. 2G

←——————————————————————22——————————————————————→

| 220 | 220 | 220 | ... ... | 220 |
|-----|-----|-----|---------|-----|

220

←————2 slots————→

| 220a | 220a |
|------|------|
| 220a | 220a |

⋮

| 220a | 220a |

220a

←——7 OFDM symbols——→

↕ 12 subcarriers

FIG. 2J

Enabling the femtocell to assign a first region of a frame as a CSG region according to a threshold — S301

Enabling the femtocell to assign a second region of the frame as a non-CSG region according to the threshold — S303

Enabling the femtocell to acquire a user type of a user equipment — S305

S307

Yes ◄ The user type is CSG? ► No

S309 Enabling the femtocell to allocate at least one scheduling unit in the CSG region to the user equipment

Enabling the femtocell to allocate at least one scheduling unit in the non-CSG region to the user equipment — S317

S311 At least one scheduling unit is available in the non-CSG region? No

At least one scheduling unit is available in the CSG region? No — S319

Yes

No

Yes

S313 Enabling the femtocell to allocate at least one scheduling unit in the non-CSG region to the user equipment

Enabling the femtocell to allocate at least one scheduling unit in the CSG region to the user equipment — S321

S315 End

End — S323

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090221295 A1

### Non-patent literature cited in the description

- LTE HeNB Interference Studies: Hybrid Cell Deployment Scenarios. *3GPP DRAFT, R4-092504,* 03 July 2009

- *Resource Coordination and Interference Mitigation between Macrocell and Femtocell,* 13 September 2009